# NOUVEAU FASCICULE DE BREVET EUROPEEN

(11) **EP 1 729 575 B2**
(45) Date de publication et mention de la décision concernant l'opposition: **19.12.2018**
(45) Mention de la délivrance du brevet: 15.07.2015
(21) Numéro de dépôt: 05746681.5
(22) Date de dépôt: 30.03.2005
(51) Int. Cl.: A01N 43/16, C05F 11/00, C05F 11/10, A01P 21/00

(54) **UTILISATION DES ULVANES COMME ELICITEURS DES MECANISMES D'ABSORPTION DE L'AZOTE ET DE LA SYNTHESE PROTEIQUE.**
VERWENDUNG VON ULVANEN ALS AUSLÖSER VON MECHANISMEN ZUR STICKSTOFFAUFNAHME UND PROTEINSYNTHESE
USE OF ULVANS AS ELICITORS OF MECHANISMS FOR NITROGEN ABSORPTION AND PROTEIN SYNTHESIS

(30) Priorité: 30.03.2004 FR 0403267
(43) Date de publication de la demande: 13.12.2006
(73) Titulaire: Agro Innovation International, 35400 Saint-Malo (FR)
(72) Inventeur: BRIAND, Xavier, F-22740 LEZARDRIEUX (FR); CLUZET, Stéphanie, F-33140 Villenave d' Ornon (FR); DUMAS, Bernard, F-31850 MONTRABE (FR); ESQUERRE-TUGAYE, Marie-Thérèse, F-31320 CASTANET-TOLOSAN (FR); SALAMAGNE, Sylvie, F-77410 GRESSY EN FRANCE (FR)
(74) Mandataire: Hubert, Philippe
(86) Numéro de dépôt international: PCT/FR2005/000764
(87) Numéro de publication internationale: WO 2005/094581

(56) Documents cités:
- EP-A- 1 437 334
- BI F ET AL: "Studies on aqueous extracts of three algae as an elicitor of plant defence mechanism" PAKISTAN JOURNAL OF BOTANY, PAKISTAN BOTANICAL SOCIETY, KARACHI, PK, vol. 31, no. 1, 1999, pages 193-198, XP001204201 ISSN: 0556-3321
- RAY B & LAHAYE M: "Cell-wall polysaccharides from the marine green alga Ulva "rigida" (Ulvales, Chlorophyta). Extraction and chemical composition" CARBOHYDRATE RESEARCH, ELSEVIER SCIENTIFIC PUBLISHING COMPANY. AMSTERDAM, NL, vol. 274, 8 septembre 1995 (1995-09-08), pages 251-261, XP004021914 ISSN: 0008-6215
- RAY B & LAHAYE M: "Cell-wall polysaccharides from the marine green alga Ulva "rigida" (Ulvales, Chlorophyta). Chemical structure of ulvan" CARBOHYDRATE RESEARCH, ELSEVIER SCIENTIFIC PUBLISHING COMPANY. AMSTERDAM, NL, vol. 274, 8 septembre 1995 (1995-09-08), pages 313-318, XP004021920 ISSN: 0008-6215
- LAHAYE M & RAY B: "Cell-wall polysaccharides from the marine green alga Ulva "rigida" (Ulvales, Chlorophyta) -- NMR analysis of ulvan oligosaccharides" CARBOHYDRATE RESEARCH, ELSEVIER SCIENTIFIC PUBLISHING COMPANY. AMSTERDAM, NL, vol. 283, 22 mars 1996 (1996-03-22), pages 161-173, XP004018728 ISSN: 0008-6215
- QUEMENER B. ET AL.: "Sugar determination in ulvans by a chemical-enzymatic method coupled to high performance anion exchange chromatography" JOURNAL OF APPLIED PHYCOLOGY, vol. 9, 1997, pages 179-188, XP002338773
- DATABASE BIOSIS [Online] BIOSCIENCES INFORMATION SERVICE, PHILADELPHIA, PA, US; 1997, LOPEZ-MOSQUERA M E ET AL: "Effects of seaweed on potato yields and soil chemistry" XP002307444 Database accession no. PREV199799753675 & BIOLOGICAL AGRICULTURE AND HORTICULTURE, vol. 14, no. 3, 1997, pages 199-205, ISSN: 0144-8765
- <<<N O N - C I T E D D O C U M E N T>>> MOSTAFA M. EL-SHEEKH et al.: "Effect of crude seaweeds extracts on seed germination, seedling growth and some metabolic processes of Vicia faba L", Cytobios, vol. 101, 2000, pages 23-35, XP055290528,
- <<<N O N - C I T E D D O C U M E N T>>> SEKAR et al.: "Effect of seaweed liquid fertilizer from Ulva Lactuca L. on Vigna unguiculata L. (Walp.)", Phykos, vol. 34, no. 1&2, 19950000, 1995, pages 49-53, XP055290529,
- <<<N O N - C I T E D D O C U M E N T>>> KLARZYNSKI et al.: "Sulfated Fucan Oligosaccharides Elicit Defense Responses in Tobacco and Local and Systemic Resistance Against Tobacco Mosaic Virus", Molecular Plant-Microbe Interactions,, vol. 16, no. 2, 2003, pages 115-122, XP002355214,
- <<<N O N - C I T E D D O C U M E N T>>> S T Zodape,: "Seaweeds As A Biofertilizer", Journal of Scientific & Industrial Research, vol. 60, May 2001 (2001-05), pages 378-382, XP055290579,
- <<<N O N - C I T E D D O C U M E N T>>> S B BUKHARI et al.: "Seaweeds as Liquid Fertilizer and Foliar Spray", Seaweed Research and Utilisation, vol. 3, no. 1&2, November 1978 (1978-11), pages 72-78, XP055290583,
- <<<N O N - C I T E D D O C U M E N T>>> BHOSLE et al.: "Effect of Seaweed Extract on the Growth of Phaseolus vulgaris L.", Indian Journal of Marine Sciences, vol. 4, no. 2, December 1975 (1975-12), pages 208-210, XP055290598,
- <<<N O N - C I T E D D O C U M E N T>>> PARADOSSI et al.: "A physico-chemical study on the polysaccharide ulvan from hot water extraction of the macroalga Ulva", International Journal of Biological Macromolecules, vol. 25, 1999, pages 309-315, XP055290604,
- <<<N O N - C I T E D D O C U M E N T>>> BOOTH: "The Manufacture and Properties of Liquid Seaweed Extracts", Proc. Intl Symp, vol. 6, 1969, pages 655-662, XP055290605,
- <<<N O N - C I T E D D O C U M E N T>>> K RAMA RAO: "Preparation, properties and use of Liquid Seaweed Fertilizer from Sargassum.", Seaweed Reseach and Utilization Association workshop on Algal products and seminar on Phaeophyceae in India, 4 June 1990 (1990-06-04), - 7 June 1990 (1990-06-07), page 3,7-9,16, XP055290612,
- <<<N O N - C I T E D D O C U M E N T>>> The effects of seaweed concentrate on the yield of nutrient stressed wheat; RP Beckett, J. Staden - Botanica marina, 1990 - Vol. 33, Issue 2 (Jan 1990)
- <<<N O N - C I T E D D O C U M E N T>>> The effect of Seaweed Concentrate and Fertilizer on the Growth of Beta vulgaris, B.C. Featonby-Smith, J. van Staden, Zeitschrift fur Pflanzenphysiologie 112(2), 155-162 (October 1983)
- <<<N O N - C I T E D D O C U M E N T>>> The Polysaccharides of green, red and brown seaweeds: Their basic structure, biosynthesis and function, Elizabeth Percival, British Phycological Journal, Vol 14, 1979
- <<<N O N - C I T E D D O C U M E N T>>> A.K. Siddhanta et al: "Water soluble polysaccharides of marine algal species of Ulva (Ulvales, Chlorophyta) of Indian waters", Indian Journal of Marine Sciences, vol. 30, 2001, pages 166-172,
- <<<N O N - C I T E D D O C U M E N T>>> Lahaye M.; Axelos M.A.V.: "Gelling properties of water-soluble polysaccharides from proliferating marine green seaweeds (Ulva spp.)", Carbohydrate Polymers, vol. 22, 1993, pages 261-265,
- <<<N O N - C I T E D D O C U M E N T>>> Eyras Maria C. et al: "Biological evaluation of seaweed composting", Compost Science and Utilization, vol. 6, no. 4, 1998, pages 74-81,

## Description

La présente invention, qui trouve application dans le domaine agricole, a essentiellement pour objet l'utilisation des ulvanes, notamment extraits d'algues vertes du genre *Ulva* ou *Enteromorpha,* ou d'oligosaccharides dérivés d'ulvanes, comme éliciteurs des mécanismes d'absorption de l'azote et de la synthèse protéique.

La présente invention a également pour objet des compositions fertilisantes telles que, par exemple, des engrais contenant ces ulvanes ou oligosaccharides dérivés d'ulvanes ainsi qu'un procédé de traitement des plantes ou des sols les utilisant.

Dans le cadre de la présente description, on entend désigner par l'expression « composition fertilisante » tout produit dont l'emploi est destiné à assurer ou à améliorer les propriétés physiques, chimiques ou biologiques des sols ainsi que la nutrition des végétaux.

Une telle composition peut être, par exemple, un engrais appliqué par voie racinaire ou par voie foliaire.

On sait que les engrais se définissent comme des matières fertilisantes dont la fonction principale est d'apporter aux plantes des éléments directement utiles à leur nutrition (éléments fertilisants majeurs, éléments fertilisants secondaires et oligo-éléments).

A cet effet, les engrais racinaires ou foliaires utilisent généralement des sources d'azote, de phosphore et de potassium ainsi que des oligo-éléments et des acides aminés.

Les plantes absorbent principalement l'azote, qui est un élément nutritif essentiel à leur croissance.

L'azote est généralement apporté sous la forme de nitrate ou d'ammonium dont l'utilisation en grande quantité pose des problèmes sur le plan écologique.

Une des réponses possibles aux effets indésirables de la fertilisation par les nitrates consiste à améliorer l'efficacité de l'absorption de l'azote et de son assimilation, c'est-à-dire son incorporation dans les molécules organiques et notamment dans les protéines.

Pour être absorbé par la plante l'azote minéral doit traverser les parois et les membranes cellulaires. Le passage de la membrane, qui entoure la cellule, constitue l'étape déterminante du contrôle par la plante de sa nutrition minérale.

A ce stade, les mécanismes d'entrée de l'azote dans la plante sont contrôlés par des transporteurs.

Par la suite, l'ammonium issu de la réduction du nitrate ou absorbé directement par les racines ou la feuille est intégré aux molécules organiques pour donner la glutamine et le glutamate. Ces deux réactions sont catalysées par la glutamine synthase et la glutamate synthétase. Ces enzymes peuvent être considérées, dans certaines conditions, comme facteurs limitants de l'assimilation de l'azote.

L'ammonium apparaît donc comme un intermédiaire essentiel du métabolisme azoté de la plante.

Cet azote est ensuite transféré à d'autres molécules pour former les acides aminés. Le matériel carboné constitutif des acides aminés et l'énergie nécessaire au déroulement de ces réactions sont fournis par la photosynthèse et la respiration.

La synthèse des acides aminés a lieu principalement dans les chloroplastes. L'assimilation du CO2 fournit le squelette carboné nécessaire à la synthèse des acides aminés.

A ce niveau, différentes enzymes comme l'énolase, la citrate synthase ainsi que l'isocitrate déhydrogénase jouent un rôle clé dans la production des précurseurs d'acides aminés obtenus à partir de la transformation du 3-phosphoglycérate produit lors de la photosynthèse.

La triosephosphate isomérase est responsable de l'étape de transformation du glycéraldéhyde phosphate en dihydroacétone phosphate. Le dihydroacétone phosphate exporté du chloroplaste représente non seulement un important précurseur de la synthèse des sucres mais aussi un métabolite de transport pour l'énergie et les équivalents réducteurs. Le dihydroacétone phosphate est à disposition pour des synthèses (saccharose, protéosynthèse) ou se transforme en 3 phospho-D-glycérate en transférant son énergie à l'ADP et son hydrogène au NAD+ nécessaires au métabolisme cellulaire et notamment à la synthèse de glutamine et la glutamate.

Les peroxydases sont, quant à elles, connues pour leur implication dans la croissance, via leur activité sur la division cellulaire. Les enzymes glutathion peroxydase et superoxyde dismutase permettent ainsi de maintenir une forte activité photosynthétique en assurant une bonne détoxification des radicaux libres produits au cours de ce processus.

Il est connu que la synthèse ou l'activité des transporteurs et des différentes enzymes impliqués dans ces mécanismes peuvent varier en réponse à un certain nombre de signaux, qu'ils soient externes (lumière, apport d'azote, substances chimiques, ...) ou internes (rythme circadien). Ainsi, pour augmenter la capacité de réponse à la fertilisation azotée en termes d'absorption de l'azote minéral, de croissance et de production de protéines d'une plante, une des stratégies possibles consiste à stimuler préalablement les réactions liées aux métabolismes azoté et carboné par l'utilisation de molécules signaux.

Les algues marines constituent une ressource végétale abondante et sont, depuis longtemps, utilisées sur les régions côtières comme fertilisants du sol. La germination des graines, l'obtention de meilleurs rendements, une résistance aux maladies, une durée de conservation plus longue des fruits ont été mis en évidence par suite de traitements de plusieurs plantes par des extraits d'algues. Les conclusions en matière de croissance et de santé des plantes avaient essentiellement été attribuées à la richesse en bétaines, en phytohormones et en oligo-éléments des algues utilisées.

La demande de brevet européen n° 1 437 334 A1 (état de l'art au titre de l'article 54(3) CBE) concerne un procédé de fabrication d'un supplément fertilisant dans lequel un stimulant de croissance est obtenu à partir des algues *ulva.* et *macrocystis* via acidification de macrocystis et digestion de la *macrocystis* acidifié et de *l'ulva* avec un agent alcalin.

L'article de Fatima Bi et al., publié dans Pak. J. Bot, 31(1) : 193-198, 1999 concerne des préparations élicitantes à base de *codium elongatum, calurpa texiflora* et *ulva lactulus* obtenues par extraction en milieu aqueux neutre, basique et acide suivi d'une précipitation dans l'éthanol.

L'article de B. Ray et al., publié dans Carbohydrate Research 274 (1995) 251-261 concerne l'extraction séquentielle de polysaccharide de l'algue *ulva rigida* avec de l'oxalate, une solution aqueuse basique, du chlorate de sodium suivi d'un traitement basique.

L'article de B. Ray et al. publié dans Carbohydrate Research 274 (1995) 313-318 concerne une étude sur la nature des liaisons polysaccharides et sur le positionnement des fonctions sulfates dans des fractions d'ulvanes obtenues à partir de l'algue *ulva rigida.*

L'article de Marc Lahaye publié dans Carbohydrate Research 283 (1996) 161-173 concerne une étude visant à obtenir des informations sur la séquence polysaccharidique de polysaccharides issus de l'algue *ulva rigida* par purification des polysaccharides *via* échanges anioniques et chromatographie de la fraction ulvane acide des ulvanes.

L'article de B. Quemener et al. publié dans Journal of Applied Phycology 9, 179-188, 1997 concerne une étude visant la détermination de la séquence polysaccharidique des ulvanes optimisée par combinaison d'une préhydrolyse acide partielle avec une hydrolyse enzymatique.

C'est dans ce contexte qu'il a été découvert, et ceci constitue le fondement de la présente invention, que les ulvanes notamment extraits d'algues vertes et les oligosaccharides dérivés de ces derniers permettent de façon tout à fait surprenante et inattendue de stimuler l'expression des gènes du métabolisme azoté (transporteur d'ammonium, nitrite réductase, glutamate synthase et glutamine synthétase) ainsi que certains gènes du métabolisme carboné, notamment impliqués dans l'apport de matériel carboné nécessaire à la synthèse des acides aminés. Cette forte activité métabolique est soutenue par une stimulation des processus de division cellulaire (peroxydases) et une bonne activité détoxifiante nécessaire au contrôle de la surproduction de radicaux libres générés par une forte activité photosynthétique.

Ces ulvanes peuvent donc être utilisés en complément dans des compositions fertilisantes, telles que des engrais, comme activateurs de l'absorption de l'azote minéral et de son assimilation sous forme de protéines.

De telles compositions permettent une production d'azote organique accrue répondant aux besoins de croissance de la culture, qui s'exprimera notamment en terme d'amélioration de rendement. Ces compositions permettent également une augmentation de la teneur en protéines et de la valeur nutritionnelle des protéagineux et des fourrages.

Ces compositions permettent encore de réduire les risques de toxicité provoquée par une accumulation excessive d'ions ammonium au niveau foliaire ou de réduire les accumulations de nitrates dans les feuilles.

Ainsi, selon un premier aspect, la présente demande vise à couvrir l'utilisation des ulvanes, notamment extraits d'algues vertes du genre *Ulva* ou *Enteromorpha,* ou d'oligosaccharides dérivés d'ulvanes, comme éliciteurs des mécanismes d'absorption de l'azote et de la synthèse protéique.

Les ulvanes utiles selon l'invention sont des polysaccharides hydrosolubles présents notamment dans les parois cellulaires des algues vertes des genres *Ulva* et *Enteromorpha.*

Les ulvanes se définissent plus précisément comme des polysaccharides acides fortement sulfatés et sont essentiellement composés d'unités dérivées de rhamnose 3-sulfate, de xylose, de xylose 2-sulfate, d'acide glucuronique et d'acide iduronique.

Les quatre unités récurrentes suivantes sont notamment caractéristiques des ulvanes : 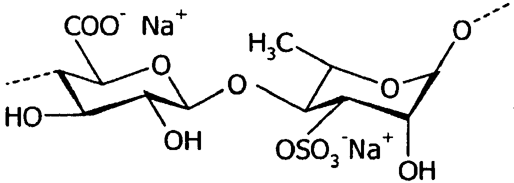 >4)- **β-D-GlcA- (1>4)**- **α-L-Rha** 3 **sulfate(1>**
(encore dénommé acide ulvanobiouronique 3-sulfate type A) 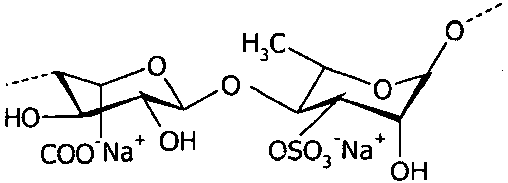 **>4)- α-L-IdoA- (1>4)- α-L-Rha 3 sulfate(1>**
(encore dénommé acide ulvanobiuronique 3-sulfate type B) 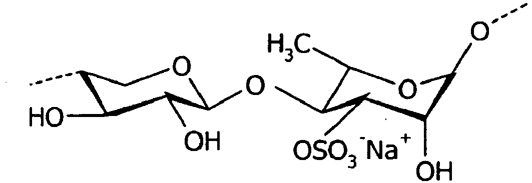 **>4)- β-D-Xyl- (1>4)- α-L-Rha 3 sulfate(1>**
(encore dénommé acide ulvanobiose 3-sulfate) 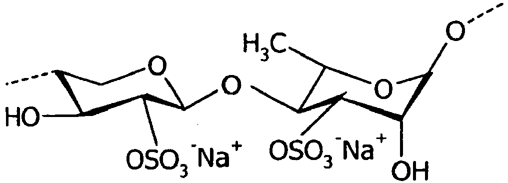 **>4)- β-D-Xyl 2 -sulfate- (1>4)- α-L-Rha 3 sulfate(1>**
(encore dénommé acide ulvanobiose 2',3-disulfate)

Les ulvanes représentent entre 5 et 20% du poids sec de l'algue. Leur poids moléculaire varie entre 90000 et 500000 g.mol⁻¹ chez les genres *Ulva* et *Enteromorpha.*

Avantageusement, les ulvanes utilisés selon la présente invention sont extraits d'algues choisies dans le groupe constitué des espèces suivantes : *Ulva armoricana, Ulva rigida, Ulva rotundata, Ulva lactuca, Enteromorpha intestinalis* et *Entoromorpha compressa.*

Des extraits d'algues riches en ulvanes susceptibles d'être utilisés dans le cadre de la présente invention peuvent être obtenus à partir des espèces d'algues précitées par un procédé comportant généralement les étapes suivantes : lavage, broyage, extraction (séparation solide-liquide) et éventuellement fractionnement et concentration.

L'extrait obtenu peut être plus ou moins concentré selon l'utilisation envisagée. Une déshydratation totale de cet extrait permettant une présentation sous forme pulvérulente hydrosoluble peut être obtenue, par exemple, par sécheur à tambour ou par atomisation.

Les oligosaccharides dérivés d'ulvanes susceptibles d'être utilisés dans le cadre de l'invention peuvent être obtenus par hydrolyse acide ou enzymatique, à partir des extraits précités.

Les conditions d'extraction et la nature des algues seront choisies de telle façon que l'extrait obtenu présente la concentration souhaitée dans l'application envisagée. Ces choix pourront être facilement réalisés par l'homme du métier notamment en tenant compte des indications générales qui vont suivre.

D'une façon générale la quantité d'ulvanes ou d'oligo-saccharides dérivés d'ulvanes apportée aux plantes est de 0,1 g à 100 g par litre et préférentiellement de l'ordre de 1 g par litre pour les apports sous forme liquide en foliaire ou dans les solutions nutritives racinaires (hydroponie, goutte à goutte, ...) ou bien encore de 10 à 1000 g/ha et de préférence de l'ordre de 200 g/ha pour les apports sous forme solide dans les engrais pulvérulents ou granulés.

La quantité d'ulvanes apportée aux plantes doit être suffisante pour stimuler l'expression des gènes impliqués dans l'élicitation des mécanismes d'absorption de l'azote et de la synthèse protéique. Cette quantité est variable selon la nature de la plante à traiter et le mode de traitement (voie foliaire ou voie racinaire). Cette quantité pourra notamment être déterminée au cas par cas par la mise en oeuvre de tests macroarrays tels que définis ci-dessous.

Selon un deuxième aspect, la présente demande vise à protéger un procédé de traitement des plantes ou des sols destiné à activer les réactions d'élicitation des mécanismes d'absorption de l'azote et de la synthèse protéique, caractérisé en ce qu'il comprend l'application auxdites plantes ou aux sols d'une quantité efficace d'ulvanes, notamment extraits d'algues vertes du genre *Ulva* ou *enteromorpha,* ou d'oligosaccharides dérivés d'ulvanes.

Avantageusement, l'application aux plantes sera réalisée par voie foliaire ou par voie racinaire.

La quantité efficace d'ulvanes ou d'oligo-saccharides dérivés d'ulvanes apportée aux plantes est de 0,1 g à 100 g par litre et préférentiellement de l'ordre de 1 g par litre pour les apports sous forme liquide en foliaire ou dans les solutions nutritives racinaires (hydroponie, goutte à goutte, ...) ou bien encore de 10 à 1000 g/ha et préférentiellement de l'ordre de 200 g/ha pour les apports sous forme solide dans les engrais pulvérulents ou granulés.

A titre d'exemples de produits fertilisants conformes à l'invention, on citera les amendements calcaires, les amendements organiques et les supports de culture, les engrais racinaires de type NP, PK, NPK, etc., les engrais foliaires ou encore les solutions nutritives racinaires.

Les substances fertilisantes susceptibles d'être utilisées en association avec les ulvanes ou les oligosaccharides dérivés d'ulvanes peuvent être de natures variées et choisies par exemple parmi l'urée, le sulfate d'ammonium, le nitrate d'ammonium, le phosphate naturel, le chlorure de potassium, le sulfate d'ammonium, le nitrate de magnésium, le nitrate de manganèse, le nitrate de zinc, le nitrate de cuivre, l'acide phosphorique, l'acide borique.

La présente invention trouve application dans le traitement d'une très grande variété de plantes.

Parmi celles-ci, on citera en particulier :
- les plantes de grande culture telles que les céréales (blé, maïs),
- les protéagineux (pois),
- les oléagineux (soja, tournesol),
- les plantes prairials utiles pour l'alimentation animale,
- les cultures spécialisées telles qu'en particulier le maraîchage (laitue, épinards, tomate, melon), la vigne, l'arboriculture (poire, pomme, nectarine), ou l'horticulture (rosiers).

Par l'expression "plante" on entend désigner dans la présente demande la plante considérée dans son ensemble, incluant son appareil racinaire, son appareil végétatif, les graines, semences et fruits.

La présente invention sera maintenant illustrée par les exemples non limitatifs suivants.

Dans ces exemples, et sauf indication contraire, les pourcentages sont exprimés en poids et la température est la température ambiante.

### EXEMPLE 1- Procédé de préparation d'un extrait d'algue riche en ulvanes utilisable dans le cadre de l'invention

### A - Description générale

### a) Préparation des ulvanes

La fraction d'ulvanes est obtenue par extraction aqueuse d'algues fraîches (100 g d'algues fraîches par litre d'eau).

L'extraction est réalisée sous agitation à 90 °C, pendant 2 heures. L'extrait est ensuite filtré sur une membrane (80 µm de porosité). Le solvant (eau) est évaporé pour obtenir une poudre hydrosoluble.

### b) Préparation des oligoulvanes

Les ulvanes préparés comme indiqué en a) ci-dessus sont hydrolysés dans 1 litre de solution acide (acide trichloroacétique ou acide chlorhydrique concentré à 2-3 mol l⁻¹) à 100 °C pendant 30 mins à 1 h, préférentiellement de l'ordre de 40 mins.

L'acide glucuronique, l'acide aldobiuronique, l'ulvanobiouronate et l'acide iduronique ont été identifiés dans les produits d'hydrolyse.

### B. Exemple détaillé d'extraction :

Un extrait *d'Ulva armoricana* enrichi en ulvanes et, en particulier, en dérivés d'acide iduronique de type xyloidurorhamnane a été obtenu en suivant le protocole expérimental suivant :

### a) Lavage

Des algues fraîches de type *Ulva armoricana* sont soumises à deux lavages successifs dans un bac d'eau afin d'éliminer le sable et les graviers.

Les algues sont ensuite déposées dans des paniers grillagés en inox avant d'être introduites dans des bacs où elles sont recouvertes d'eau.

Une agitation par des buses d'aération permet de maintenir les algues en suspension en favorisant ainsi la décantation des impuretés.

### b) Broyage

Les algues, ainsi lavées, sont égouttées puis broyées en morceaux de 1 à 10 mm.

### c) Extraction

1000 kg d'algues sont dispersés dans un réacteur chauffant contenant 10000 kg d'une solution aqueuse portée à une température de 90°C. L'ensemble est maintenu à cette température pendant une durée d'environ 2 heures.

Préalablement à l'extraction, les cellules algales déjà broyées sont micro-éclatées au moyen d'un homogénéisateur de type ULTRA-TURAX® afin de favoriser l'extraction. L'opération de séparation intervient à l'issue des 2 heures d'extraction.

### d) Séparation

La fraction soluble, riche en dérivés d'acide iduronique de type xyloidurorhamnane, est séparée des débris d'algues par centrifugation (séparation solide-liquide).

L'extrait centrifugé est ensuite filtré, soit sur un filtre à terre de diatomées, soit sur un filtre à plateaux, puis à nouveau filtré sur une membrane jusqu'à 1 µm.

Le filtrat ainsi obtenu comprend entre 0,1 et 1 % en poids d'extrait sec.

L'extrait ainsi préparé peut être utilisé sous une forme plus ou moins concentrée, la concentration finale étant déterminée en fonction de la teneur recherchée en dérivés actifs dans l'application envisagée.

Ainsi, le filtrat mentionné précédemment peut être concentré, par exemple, au moyen d'un évaporateur à flot tombant, de façon à ce que l'extrait sec représente de 10 à 60 % en poids de celui-ci.

Une déshydratation totale peut également être obtenue, par exemple, par sécheur à tambour ou par atomisation lorsque l'on recherche une présentation sous forme pulvérulente hydrosoluble.

En procédant comme décrit ci-dessus, on a préparé divers extraits à partir de six espèces d'algues vertes des genres *Ulva* ou *Enteromorpha.* La composition de ces extraits secs est présentée dans les tableaux 1A et 1B ci-après.

**TABLEAU 1A : Composition des extraits d'algues vertes**

| **Algue** | **% d'ulvanes** (% du poids sec de l'algue) | **% de sucres totaux** | **% de sulfates** | **% de protéines** |
|---|---|---|---|---|
| ***Ulva armoricana*** | 7-15 | 50-80 | 10-20 | 3-7 |
| ***Ulva rigida*** | 5-18 | 50-80 | 13-17 | 1-10 |
| ***Ulva rotundata*** | 6-15 | 50-70 | 10-20 | 1-10 |
| ***Ulva lactuca*** | 5-17 | 50-70 | 10-20 | 1-8 |
| ***Enteromorpha intestinalis*** | 5-15 | 45-75 | 15-20 | 1-10 |
| ***Enteromorpha compressa*** | 5-16 | 50-75 | 10-20 | 1-12 |

**TABLEAU 1B : Composition en oses et en acides uroniques des extraits d'algues vertes**

| **Algue** | **Rha** | **Gal** | **Glc** | **Xyl** | **GlcA** | **IdoA** |
|---|---|---|---|---|---|---|
| ***Ulva armoricana*** | 45-50 | 1-4 | 5-20 | 6-15 | 15-25 | 5-15 |
| ***Ulva rigida*** | 50-60 | 0,5-2 | 5-8 | 5-15 | 18-35 | 2-5 |
| ***Ulva rotundata*** | 45-55 | 1-3 | 5-15 | 5-25 | 16-30 | 0,5-5 |
| ***Ulva lactuca*** | 45-60 | 0,5-5 | 2-6 | 1-10 | 15-25 | 2-5 |
| ***Enteromorpha compressa*** | 25-50 | 1-5 | 2-10 | 5-15 | 10-20 | 5-10 |
| ***Enteromorpha intestinalis*** | 30-50 | 1-4 | 1-5 | 6-15 | 15-20 | 5-10 |

### EXEMPLE 2

### A - Effets des ulvanes sur l'expression des gènes d'une plante modèle

Une analyse globale de l'expression de nombreux gènes impliqués dans la défense d'une plante modèle a été réalisée en faisant appel aux techniques de génomique fonctionnelle. La légumineuse *Medicago truncatula* (nombre important de séquences d'ADN disponibles) a été utilisée comme plante modèle.

On a ainsi étudié l'effet des ulvanes sur plus de 25 gènes impliqués dans le métabolisme azoté et carboné, ainsi que dans les processus oxydatifs liés à la division cellulaire de cette plante modèle par analyse macroarray.

### a) Matériel biologique

Des plantes de *Medicago truncatula* lignée F83 005.5 sont cultivées dans un environnement contrôlé (16h / 8h, 20°C / 15°C, 60 % humidité).

Les produits étudiés ont été apportés, soit par voie foliaire, soit par voie racinaire.

Dans le cas de l'apport foliaire, les différentes solutions d'éliciteurs sont pulvérisées sur les feuilles des plantes âgées de 1 mois à la concentration de 1 mg/mL.

Dans le cas de l'apport racinaire les produits sont introduits dans le milieu nutritif.

L'étude de l'expression globale des gènes potentiellement impliqués dans le métabolisme et dans la signalisation a été poursuivie par macroarray.

### b) Préparation des Macroarrays

Une sélection d'étiquettes de gènes exprimés (EST) de *Medicago truncatula* basée essentiellement sur leurs implications dans le métabolisme primaire est réalisée en utilisant les bases de données TGIR et MENS.

Des EST appartenant aux séquences de *Medicago truncatula* [Tentative consensus séquences (TC)] sont récupérées des librairies MtBA, MtBB et MtBC.

Deux fragments génomiques (TC85619, TC85808) sont amplifiés par PCR utilisant l'ADN génomique de Me*dicago truncatula* comme amorce. Ces 2 ESTs sont ensuite clonés en pGEM-Teasy vector (Promega) et vérifiés par séquençage.

Les autres fragments d'ADN sont amplifiés par PCR en utilisant les amorces universelles complémentaires aux séquences vecteurs encadrant le site de clonage des ADN. Les produits d'amplification sont analysés par électrophorèse et sont ajustés à 0,2-0,5 µg/µL avec du DMSO (50%) et déposés sur une membrane à l'aide d'un robot (Eurogridder spotting robot).

### c) Résultats

L'activité des ulvanes d'algues conformément à l'exemple 1 a été étudiée en suivant l'expression, de façon simultanée, d'une trentaine de gènes. Les différentes catégories d'ESTs sélectionnées sont classées par famille : métabolisme azoté, métabolisme carboné et processus oxydatifs.

Les extraits d'algues vertes riches en ulvanes entraînent l'induction de 5 à 7 gènes potentiellement impliqués dans le métabolisme primaire. Des réponses similaires sont obtenues pour les 2 types d'apport, i.e. foliaire et racinaire. L'induction des gènes est plus importante pour les ulvanes riches en dérivés d'acide xyloidurorhamnane, comme par exemple les ulvanes d'*Ulva armoricana* et *d'Enteromorpha intestinalis* Les oligoulvanes obtenus après hydrolyse présentent des résultats identiques.

**TABLEAU 2C : Effets des ulvanes de différentes algues vertes sur l'expression de certains gènes en macroarrays**

| **Famille de gènes** | **Nombre de TC¹** | ***Ulva*** | | | | | **Enteromorpha** | |
|---|---|---|---|---|---|---|---|---|
| | | **U. armoricana²** | | **U. rigida** | **U. rotundata** | **U. lactuca** | **E. compressa** | **E. intestinalis** |
| | | **Ulvanes** | **Oligoulvanes** | | | | | |
| Processus oxydatifs | 8 | 2 | 2 | 2 | 2 | 1 | 2 | 1 |
| Métabolisme azoté | 6 | 2 | 2 | 1 | 1 | 1 | 1 | 2 |
| Métabolisme carboné | 19 | 3 | 3 | 2 | 4 | 3 | 3 | 3 |
| ***Total*** | ***33*** | ***7*** | ***7*** | ***5*** | ***7*** | ***5*** | ***6*** | ***6*** |
| ¹ Les valeurs correspondent au nombre de TC (TIGR Tentative Consensus Sequence) dans chaque famille de gènes. | | | | | | | | |
| ² Les valeurs sont des moyennes de 3 traitements indépendants correspondant au nombre de gènes. | | | | | | | | |

### d) Influence du nombre de traitements sur la sensibilisation de la plante

Une deuxième série d'expérimentations a été réalisée pour évaluer l'effet de la sensibilisation de la plante traitée avec l'extrait *d'Ulva armoricana.* L'effet d'un second traitement avec l'extrait *d'Ulva armoricana,* 3 jours après la première pulvérisation, a ainsi été évalué. Les effets sur l'expression des gènes sont étudiés par macroarray.

Les traitements en un ou deux apports induisent l'expression d'un grand nombre de gènes impliqués dans les métabolismes primaire et de signalisation. Les traitements induisent l'expression de gènes dans toutes les catégories fonctionnelles.

Dans le cas du métabolisme azoté, un traitement unique permet de stimuler l'expression de la glutamine synthétase et de la glutamate déhydrogénase. Un double traitement permet de doubler le nombre de gènes exprimés avec notamment une surexpression des gènes codant pour le transporteur d'ammonium, la nitrite réductase, la glutamate synthase et la glutamine synthétase.

Dans le cas du métabolisme carboné, un traitement unique permet de stimuler les gènes codant l'énolase, la triosephosphate isomérase et l'isocitrate déhydrogénase. Un double traitement induit la surexpression des gènes codant l'énolase phosphatase et la citrate synthase.

Dans le cas des processus oxydatifs, on observe l'induction de l'expression de différents gènes codant différentes enzymes : ascorbate peroxidase, peroxidase, superoxide dismutase, gluthatione peroxidase ou glutathion S-transférase.

**TABLEAU 2D : Effets des ulvanes de Ulva armoricana sur l'expression de certains gènes en macroarravs**

| | | | Traitement^{a} | | | | | |
|---|---|---|---|---|---|---|---|---|
| TC TIGR^{b} | Fonction putative | Accession dans GB^{c} | AV^{d} | | | AV+AV^{e} | | |
| | | | 1 | 2 | 3 | 1 | 2 | 3 |
| **Processus oxydatifs** | | | | | | | | |
| TC76384 | ascorbate péroxydase | AL367369 | 1,60 | 2,40 | 1,00 | 0,90 | 0,74 | NS |
| TC85974 | peroxydase | AL371851 | 1,05 | 1,46 | NS | 2,77 | 5,38 | 2,69 |
| TC76946 | superoxyde dismutase | AL375556 | 2,49 | 3,12 | 1,00 | 1,40 | NS | 1,00 |
| TC86106 | glutathione peroxydase | AL374155 | 0,88 | 1,43 | 1,40 | NS | 2,08 | 1,90 |
| TC85451 | glutathione S-transférase | AL368847 | 1,00 | 1,16 | 1,00 | 1,15 | 1,55 | 3,01 |
| TC87485 | similaire à une qermine | AL373691 | NS | 1,32 | 1,10 | 1,16 | NS | NS |

| **Voie des sucres** | | | | | | | | |
|---|---|---|---|---|---|---|---|---|
| TC77339 | énolase-phosphatase | AL378849 | 1,00 | 0,93 | NS | NS | 1,79 | 2,09 |
| TC85317 | énolase | AL367711 | 1,93 | 1,75 | 1,43 | NS | 0,96 | NS |
| TC85485 | transkétolase | AL373090 | 1,00 | 1,00 | 1,00 | 1,00 | NS | 1,00 |
| TC85539 | triosephosphate isomerase | AL365666 | 1,61 | 1,47 | 1,61 | 0,94 | 1,23 | NS |
| TC85625 | isocitrate déshydroqénase | AL368524 | 1,07 | 2,67 | 1,70 | 0,87 | 1,07 | 1,44 |
| TC85966 | citrate synthase | AL374303 | 1,00 | NS | NS | 1,59 | 2,44 | 2,24 |
| | | | | | | | | |

| **Voie de l'azote** | | | | | | | | |
|---|---|---|---|---|---|---|---|---|
| TC76943 | glutamine synthétase | AL366171 | 2,19 | 4,33 | 4,06 | 2,88 | 2,82 | 0,94 |
| TC77277 | nitrite réductase | | 0,84 | NS | 0,83 | 3,56 | 2,20 | 2,34 |
| TC77553 | glutamate synthase | AL366890 | 0,92 | 0,74 | 0,82 | NS | 2,28 | 1,97 |
| TC86604 | glutamate déshydrogénase | AL372216 | 1,00 | 1,51 | 2,21 | 1,00 | NS | NS |
| TC87190 | transporteur d'ammonium | AL370643 | 1,47 | 1,07 | NS | NS | 2,09 | 2,54 |
| a : Valeurs correspondant aux rapports "intensités des signaux des plantes traitées par l'extrait *d'Ulva* (AV)" sur "intensités des signaux des plantes contrôles". Seuls les gènes induits (rapport>1,5) dans au moins deux expériences indépendantes sont inclus. Lors de notre comparaison des réplicats des trois expériences, nous considérons que le rapport d'un seul gène ne doit pas être induit dans un réplicat et réprimé dans au moins un des autres, sinon il est considéré comme non significatif (NS). | | | | | | | | |
| b : TC TIGR, numéro de Tentative de Consensus selon The Institute of Genome Research. | | | | | | | | |
| c : GB, numéro d'accession dans Genebank. | | | | | | | | |
| d : AV, un seul traitement AV. | | | | | | | | |
| e : AV+AV, deux traitements AV consécutifs. | | | | | | | | |

### EXEMPLE 3 - Effets des ulvanes sur l'absorption de l'azote minéral

L'expérimentation est effectuée sur du blé. L'extrait d'ulvanes est apporté au sol à raison de 100 et 200 g/ha ou par voie foliaire à raison de 0,1 et 1g par litre en même temps qu'une fertilisation azotée (nitrate d'ammonium).

La coupe des blés et le pressage des bas de tige ont été réalisés le même jour, au stade épiaison - début sortie des étamines, une semaine après l'application. Le dosage de l'azote minéral est effectué sur le jus de sève.

L'ensemble des traitements en foliaire ou au sol montre un effet significatif sur l'absorption de l'azote minéral et confirme l'effet stimulant sur les gènes impliqués dans le transport de l'azote et notamment de l'ammonium.

**TABLEAU 3 : Effets des ulvanes sur l'absorption d'azote minéral**

| | **Concentration d'ulvanes** | **Absorption d'azote minéral** (en % du témoin) |
|---|---|---|
| *Sol* | 100 g /ha | + 12 % |
| | 200 g /ha | + 24 % |
| *Voie foliaire* | 0,1 g /L | + 18 % |
| | 1 g /L | + 32 % |

### EXEMPLE 4 - Effets des ulvanes sur la production de protéines

L'expérimentation est réalisée sur du pois fourrager variété Solara et sur du maïs variété Sabrina. Les plantes sont cultivées en pots sur de la vermiculite dans un milieu nutritif de Hoagland.

L'extrait d'ulvanes est incorporé à la solution nutritive avant semis à la dose de 200 g/ha ou appliqué par pulvérisation foliaire à la dose de 1 g par litre. Les cultures sont conduites pendant 4 semaines pour le pois et 6 semaines pour le maïs. A ce stade, la teneur et la quantité de protéines produites par les appareils racinaire et foliaire sont déterminées.

Dans le cas de l'apport racinaire, on observe une augmentation de la teneur en protéines racinaires de 16% pour le pois et 18 % pour le maïs. L'amélioration du taux de protéines racinaires conjointement avec la stimulation de la biomasse racinaire entraîne une augmentation de la quantité totale de protéines racinaires produites par chaque plant : 27% pour le pois et 31% pour le maïs. Dans le même temps, le taux de protéines foliaires est augmenté de 12%, pour les 2 cultures.

Dans le cas de l'apport foliaire, l'augmentation du taux de protéines est de 15% pour le pois et de 16% pour le maïs.

**Tableau 4 : Effets des ulvanes sur la production de protéines**

| *Cultures* | Type d'apport | **Taux de protéines racinaires** (en % du témoin) | **Taux de protéines foliaires** (en % du témoin) |
|---|---|---|---|
| *Pois* | Sol | + 16 % | + 12 % |
| | Pulvérisation foliaire | - | + 15 % |
| *Maïs* | Sol | +18% | + 12 % |
| | Pulvérisation foliaire | - | + 16 % |

### EXEMPLE 5 - Effets des ulvanes sur la valorisation des réserves azotées du sol ainsi que sur l'efficacité de la fertilisation azotée.

L'essai est réalisé sur du maïs variété Sabrina.

Les dérivés d'ulvanes sont appliqués au sol (200 g/ha) ou en pulvérisation foliaire (1 g par litre) en végétation.

L'action du produit est étudiée d'une part en situation optimale (N = 180 U) et d'autre part en situation pénalisante (absence de fertilisation azotée).

Le dispositif expérimental comprend des modalités à 4 répétitions.

Chaque parcelle élémentaire est constituée de 6 rangs de 12 m, avec récolte des 2 rangs centraux. Pour les parcelles bénéficiant d'une fertilisation azotée, l'apport se fait sous forme d'urée au moment du labour (60 U) et au stade 8 feuilles (120 U).

Les traitements racinaire et foliaire sont appliqués environ 1 mois après le semis, au stade 5-6 feuilles.

Les contrôles effectués sur les lots témoins et traités se font sur les éléments de rendement.

**Tableau 5 : Effets des ulvanes sur l'expression du rendement du maïs, cultivé en conditions limitantes en azote.**

| Unités d'azote / ha | Traitement | Rendement à 15% | | |
|---|---|---|---|---|
| | | q/ha | Variation / témoin | |
| | | | q/ha | % |
| Dose 0 | Témoin | 109,45 | | |
| | Ulvanes au sol | 121,80 | + 2,35 | + 11 % |
| | Ulvanes foliaire | 130,57 | + 21,12 | + 20 % |
| Dose 180 | Témoin | 139,65 | | |
| | Ulvanes au sol | 144,99 | + 5,34 | + 4 % |
| | Ulvanes foliaire | 149,43 | + 9,78 | + 7 % |

Les traitements ulvanes permettent une amélioration des rendements quelque soit la modalité.

Dans le cas de l'apport à 180 U, le rendement passe de 139,65 q/ha (quintaux par hectare) pour le témoin à 144,99 q/ha pour l'apport racinaire, soit une augmentation de rendement de plus de 5 q/ha.

Dans le cas de l'apport foliaire, le gain s'élève à plus de 9 q/ha soit une augmentation de 7 % du rendement.

Une situation plus pénalisante en azote favorise l'expression des traitements ulvanes en faveur du rendement. Le différentiel devient alors important avec un rendement qui passe de 109,45 q/ha pour le témoin à 121,8 q/ha pour l'apport racinaire, soit un gain de 12,35 q/ha. Ce gain correspond ainsi à une progression de plus de 11% du rendement. Dans le cas de l'apport foliaire, le gain s'élève à plus de 21,12 q/ha, soit une augmentation de 20 % du rendement.

Les traitements ulvanes permettent ainsi de réduire les effets dépressifs d'une situation pénalisante en azote. L'absence de fertilisation entraîne une chute du rendement de 30 q/ha entre les témoins, alors qu'elle n'est que de 9 q/ha entre le maïs traité (apport foliaire en absence de fertilisation azotée) et le témoin fertilisé (180 U).

### EXEMPLE 6 - Effets des ulvanes sur la réduction de l'accumulation de nitrates dans les feuilles

Une culture de laitue est réalisée sur vermiculite avec un apport de solution azotée entraînant l'accumulation des nitrates dans les feuilles.

Au stade 4 feuilles, les plantules sont repiquées dans des pots contenant de la vermiculite imbibée d'une solution nutritive et de nitrates (20 méq N/L).

Dans le cas du traitement foliaire, les ulvanes sont pulvérisées sur les plantes 5 jours et 10 jours après le repiquage.

Dans le cas du traitement au sol, les ulvanes sont ajoutées directement dans la solution nutritive.

L'analyse des feuilles en nitrates est réalisée 20 jours après le repiquage.

**Tableau 6 : Effets des ulvanes sur la réduction de l'accumulation de nitrates dans les feuilles**

| | **Dose** | **Réduction de l'accumulation de NO₃⁻ dans la feuille** |
|---|---|---|
| **Apport foliaire** | 0,1 g/L | -12 % |
| | 1 g/L | - 34 % |
| | 10 g/L | - 36 % |
| **Apport au sol** | 10 g/ha | - 6 % |
| | 100 g/ha | - 18 % |
| | 1000 g/ha | - 20 % |

L'ensemble des traitements avec l'extrait d'ulvanes entraîne une réduction de l'accumulation des nitrates dans les feuilles de laitue. Elle varie de 12 à 36 % dans le cas du traitement foliaire et de 6 à 20 % dans le cas de l'apport au sol.

### EXEMPLE 7 - Exemples de formulations incorporant des ulvanes

On donnera ci-après, à titre d'exemples, diverses formulations utilisables selon l'invention avec des indications sur les conditions de mise en oeuvre de ces formulations.

### A - AMENDEMENTS

### a) AMENDEMENT CALCAIRE

| | |
|---|---|
| Lithothamnium | 1000 kg |
| Dérivés d'ulvanes | QSP 200 g/ha |
| Dose d'apport : 1 T/ha | |
| | |
| Carbonate de calcium | 1000 kg |
| Dérivés d'ulvanes | QSP 1000 g/ha |
| Dose d'apport : 1 T/ha | |

### b) AMENDEMENT ORGANIQUE ET SUPPORTS DE CULTURE

| | |
|---|---|
| Terreau | 500 kg |
| Tourbe | 500 kg |
| Dérivés d'ulvanes | QSP 500 g/ha |
| Dose d'apport : 1T/ha | |

### B - ENGRAIS RACINAIRES

### a) ENGRAIS NP

| | |
|---|---|
| Lithothamnium | 310 kg |
| Chlorure de potassium | 167 kg |
| Urée | 161 kg |
| Sulfate d'ammoniaque | 362 kg |
| Dérivés d'ulvanes | QSP 200 g/ha |

| CULTURES | DOSE D'APPORT (kg/ha) |
|---|---|
| Pâtures | 200 - 400 |
| Céréales | |
| Maïs | |

### b) ENGRAIS NPK + MgO

| | |
|---|---|
| Lithothamnium | 158 kg |
| Phosphate d'ammoniaque | 116 kg |
| Sulfate d'ammoniaque | 186 kg |
| Urée | 156 kg |
| Oxyde de magnésium | 50 kg |
| Chlorure de potassium | 334 kg |
| Dérivés d'ulvanes | QSP 1000 g/ha |

| CULTURES | DOSE D'APPORT (kg/ha) |
|---|---|
| Maïs | 400 - 800 |
| Céréales | |
| Prairies | |
| Toutes cultures | |

### C - ENGRAIS FOLIAIRES

### a) SOLUTION Mg

| | |
|---|---|
| Nitrate de Magnésium | 50 kg |
| Eau | 50 kg |
| Dérivés d'ulvanes | QSP 1 g/L (solution finale appliquée sur la plante) |

| CULTURES | Nombre d'apports à différents stades de la campagne | Dose par apport |
|---|---|---|
| Vergers | 3 - 6 | 8 L/ha |
| Cultures maraîchères | 2 - 6 | 5 - 8 L/ha |

### b) SOLUTION N Fe Mn

| | |
|---|---|
| Nitrate de manganèse | 15 kg |
| Chlorure ferrique | 25 kg |
| Eau | 60 kg |
| Dérivés d'ulvanes | QSP 0,1 g/L (solution finale appliquée sur la plante) |

| CULTURES | Nombre de traitements | Dose par traitement |
|---|---|---|
| Verqers | 4 - 6 | 3 - 6 L/ha |
| Cultures maraîchères | 4 - 6 | 3 - 6 L/ha |

### c) SOLUTION N Mn Zn

| | |
|---|---|
| Nitrate de Manganèse | 31 kg |
| Nitrate de Zinc | 22 kg |
| Eau | 47 kg |
| Dérivés d'ulvanes | QSP 10 g/L (solution finale appliquée sur la plante) |

| CULTURES | Nombre d'apports | Dose par apport |
|---|---|---|
| Maïs | 1 - 2 | 4 - 8 L/ha |
| Lin | 1 - 2 | 4 - 8 L/ha |
| Betterave | 1 - 3 | 4 - 8 L/ha |
| Soja | 1 - 2 | 4 - 8 L/ha |
| Pomme de terre | 1 - 3 | 4 - 8 L/ha |
| Haricots pois | 2 - 3 | 4 - 8 L/ha |

### d) SOLUTION NPK Oligoéléments

| | |
|---|---|
| Urée | 17 kg |
| Acide phosphorique | 9 kg |
| Potasse | 9 kg |
| Nitrate de Manganèse | 0,7 kg |
| Nitrate de Zinc | 0,3 kg |
| Nitrate de Cuivre | 0,10 kg |
| Chlorure ferrique | 0,20 kg |
| Acide borique | 0,4 kg |
| Eau | 63,3 kg |
| Dérivés d'ulvanes | QSP 1 g/L (solution finale appliquée sur la plante) |

| CULTURES | Nombre d'apports | Dose par apport |
|---|---|---|
| Cultures maraîchères | 5 - 10 | 4 - 6 L/ha |
| Verqers | 4 - 6 | 4 - 6 L/ha |

### e) SOLUTION B P K

| | |
|---|---|
| Potasse | 8 kg |
| Acide phosphorique | 1 kg |
| Acide borique | 1 kg |
| Eau | 90 kg |
| Dérivés d'ulvanes | QSP 10 g/L (solution finale appliquée sur la plante) |

| CULTURES | Nombre d'apports | Dose par apport |
|---|---|---|
| Cultures maraîchères | 2 - 4 | 3 - 5 L/ha |
| Cultures fruitières | 3 | 5 L/ha |

### D-SOLUTIONS NUTRITIVES RACINAIRES (HYDROPONIE, GOUTTE A GOUTTE)

### a) SOLUTION NPK Mg

| | |
|---|---|
| Nitrate de potassium | 50 g/L |
| Phosphate de potassium | 27 g/L |
| Sulfate de magnésium | 49 g/L |
| Dérivés d'ulvanes | 200 g/L (i.e. 1g/L de solution finale appliquée sur la plante) |
| Dilution 1 L pour 200 L d'eau | |

### b) SOLUTION N Ca Mg

| | |
|---|---|
| Calcium nitrate | 118 g/L |
| Chelate de fer | 5 g/L |
| Dérivés d'ulvanes | 100 g/L (i.e. 0,5 g/L de solution finale appliquée sur la plante) |

Dilution 1 L pour 200 L d'eau

## Revendications

1. Utilisation des ulvanes ou d'oligosaccharides dérivés d'ulvanes, comme éliciteurs des mécanismes d'absorption de l'azote et de la synthèse protéique.

2. Utilisation selon la revendication 1, **caractérisée en ce que** les ulvanes précités sont extraits d'algues choisies dans le groupe constitué des espèces suivantes : *Ulva armoricana, Ulva rigida, Ulva rotundata, Ulva lactuca, Enteromorpha intestinalis* et *Entoromorpha compressa.*

3. Utilisation selon la revendication 1 ou 2, **caractérisée en ce que** les extraits précités sont obtenus par un procédé comportant les étapes suivantes : lavage, broyage, extraction (séparation solide-liquide).

4. Utilisation selon la revendication 3, **caractérisée en ce que** le procédé précité comporte les étapes supplémentaires suivantes : fractionnement, concentration et déshydratation.

5. Utilisation selon la revendication 1, **caractérisée en ce que** les oligosaccharides dérivés d'ulvanes précités sont obtenus par hydrolyse acide ou enzymatique.

6. Utilisation selon l'une des revendications 1 à 5, **caractérisée en ce que** les ulvanes ou oligosaccharides dérivés d'ulvanes sont apportés aux plantes :
- soit sous forme liquide par voie foliaire ou dans des solutions nutritives racinaires en une quantité de 0,1 à 100 g par litre,
- soit sous forme solide en une quantité de 10 à 1000 g par hectare.

7. Procédé pour améliorer l'absorption d'azote et la synthèse protéique des plantes, **caractérisé en ce qu'**il comprend l'application auxdites plantes ou aux sols, d'une quantité efficace d'ulvanes ou d'oligosaccharides dérivés d'ulvanes :
- de 0,1 à 100 g par litre pour les apports sous forme liquide par voie foliaire ou dans des solutions nutritives racinaires,
- de 10 à 1000 g par hectare pour les apports sous forme solide.

8. Procédé selon la revendication 7, **caractérisé en ce que** l'application aux plantes est réalisée par voie foliaire ou par voie racinaire.

## Patentansprüche

1. Verwendung von Ulvanen oder von aus Ulvanen abgeleiteten Oligosacchariden, als Auslöser von Mechanismen zur Stickstoffaufnahme und Proteinsynthese.

2. Verwendung nach Anspruch 1, **dadurch gekennzeichnet, dass** die vorgenannten Ulvane aus Algen, ausgewählt aus der Gruppe, die von den folgenden Spezies: *Ulva armoricana, Ulva rigida, Ulva rotundata, Ulva lactuca, Enteromorpha intestinalis* und *Entoromorpha compressa* gebildet ist, extrahiert sind.

3. Verwendung nach Anspruch 1 oder 2, **dadurch gekennzeichnet, dass** die vorgenannten Extrakte durch ein Verfahren erhalten werden, welches die folgenden Schritte umfasst: Waschen, Zerkleinern, Extraktion (Fest-Flüssig-Trennung).

4. Verwendung nach Anspruch 3, **dadurch gekennzeichnet, dass** das vorgenannte Verfahren die folgenden zusätzlichen Schritte umfasst: Fraktionierung, Konzentration und Dehydratation.

5. Verwendung nach Anspruch 1, **dadurch gekennzeichnet, dass** die vorgenannten aus Ulvanen abgeleiteten Oligosaccharide durch saure oder enzymatische Hydrolyse erhalten werden.

6. Verwendung nach einem der Ansprüche 1 bis 5, **dadurch gekennzeichnet, dass** die Ulvane oder aus Ulvanen abgeleiteten Oligosaccharide den Pflanzen zugeführt werden:
- entweder in flüssiger Form über die Blätter oder in Wurzelnährlösungen in einer Menge von 0,1 bis 100 g pro Liter,
- oder in fester Form in einer Menge von 10 bis 1000 g pro Hektar.

7. Verfahren zur Verbesserung der Stickstoffaufnahme und der Proteinsynthese von Pflanzen, **dadurch gekennzeichnet, dass** es das Aufbringen einer wirkungsvollen Menge von Ulvanen oder von aus Ulvanen abgeleiteten Oligosacchariden auf die Pflanzen oder die Böden umfasst:
- von 0,1 bis 100 g pro Liter für die Zufuhr in flüssiger Form über die Blätter oder in Wurzelnährlösungen,
- von 10 bis 1000 g pro Hektar für die Zufuhr in fester Form.

8. Verfahren nach Anspruch 7, **dadurch gekennzeichnet, dass** das Aufbringen auf die Pflanzen über die Blätter oder über die Wurzeln erfolgt.

## Claims

1. The use of ulvans or of ulvan-derived oligosaccharides, as elicitors of mechanisms for nitrogen absorption and protein synthesis.

2. The use as claimed in claim 1, **characterized in that** the abovementioned ulvans are extracted from algae chosen from the group consisting of the following species: *Ulva armoricana, Ulva rigida, Ulva rotundata, Ulva lactuca, Enteromorpha intestinalis* and *Enteromorpha compressa.*

3. The use as claimed in claim 1 or 2, **characterized in that** the abovementioned extracts are obtained by means of a method comprising the following steps: washing, milling, extraction (solid-liquid separation).

4. The use as claimed in claim 3, **characterized in that** said method comprises the following steps: fractionation, concentration and dehydration.

5. The use as claimed in claim 1, **characterized in that** the abovementioned ulvan-derived oligosaccharides are obtained by acid hydrolysis or enzymatic hydrolysis.

6. The use as claimed in one of claims 1 to 5, **characterized in that** the ulvans or ulvan-derived oligosaccharides are given to the plants:
- either in liquid form via the leaves or in nutritive solutions for the roots in an amount of from 0.1 to 100 g per liter,
- or in solid form, in an amount of 10 to 1000 g per hectare.

7. A method for improving the nitrogen absorption and protein synthesis of plants, **characterized in that** it comprises the application, to said plants or soils, of an effective amount of ulvans or of ulvan-derived oligosaccharides:
- from 0.1 g to 100 g per liter when applied in liquid form via the leaves or in nutritive solutions for the roots,
- from 10 to 1000 g when applied in solid form.

8. The method as claimed in claim 7, **characterized in that** the application to the plants is carried out via the leaves or via the roots.
